(19) **Europäisches Patentamt**
**European Patent Office**
**Office européen des brevets**

(11) **EP 4 681 546 A1**

(12) **EUROPEAN PATENT APPLICATION**
published in accordance with Art. 153(4) EPC

(43) Date of publication:
**21.01.2026 Bulletin 2026/04**

(21) Application number: **24770918.1**

(22) Date of filing: **13.03.2024**

(51) International Patent Classification (IPC):
***A23C 9/123*** *(2006.01)*

(52) Cooperative Patent Classification (CPC):
**A23C 9/123**

(86) International application number:
**PCT/JP2024/009707**

(87) International publication number:
**WO 2024/190813 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023039530**

(71) Applicant: **MEIJI CO., LTD**
**Chuo-ku**
**Tokyo 104-8306 (JP)**

(72) Inventor: **MIYAUCHI, Atsushi**
**Hachioji-shi, Tokyo 192-0919 (JP)**

(74) Representative: **TBK**
**Bavariaring 4-6**
**80336 München (DE)**

(54) **METHOD FOR PRODUCING FERMENTED MILK**

(57) This method for producing fermented milk includes: a fermentation step of adding a milk-fermenting starter to a raw material mix containing raw material milk to ferment a mixture of the raw material mix and the milk-fermenting starter; and a cooling step of cooling a fermented product obtained in the fermentation step, wherein in the fermentation step, fermentation is performed while flowing the mixture or the fermented product thereof such that a volume-based 90% particle diameter of the mixture or the fermented product thereof does not exceed 125 μm, and in the cooling step, the fermented product obtained in the fermentation step is cooled while flowing.

## Description

Technical Field

The present invention relates to a method for producing fermented milk.

Background Art

The fermented milk is obtained by fermenting milk or milk containing a non-fat milk solid content equivalent to that of milk with a lactic acid bacterium or yeast to form a paste, a liquid or a solid, or a frozen product thereof, and can be roughly classified into two types. One is a pre-fermentation type, and the other is a post-fermentation type. In the former (pre-fermentation type), a predetermined amount of a milk-fermenting starter is added to a raw material mix containing raw material milk. A mixture of the raw material mix and the milk-fermenting starter is fermented in a state of being left standing while using a tank or the like before the mixture is packed in an individual container for distribution, until a predetermined acidity of lactic acid, a predetermined pH, or the like is reached, and then cooled. The obtained fermented milk is then crushed or the like, and pulp, a sweetener (e.g., a sugar liquid), and/or others are mixed as necessary. The resulting mixture is then filled into an individual container for distribution (e.g., a paper container, plastic container, glass container). In the latter (post-fermentation type), a predetermined amount of a milk-fermenting starter is added to a raw material mix containing raw material milk. A mixture of the raw material mix and the milk-fermenting starter is filled into an individual container for distribution. The mixture is fermented, until a predetermined acidity of lactic acid, a predetermined pH, or the like is reached, while using a fermentation chamber or the like, and then cooled.

When stirring is performed at the time of fermentation, the dissolved oxygen concentration in the raw material mix increases. This causes a risk that the growth of lactic acid bacteria is inhibited and fermentation is delayed, or aggregates are locally generated. Therefore, in any of the production methods, fermentation of the raw material mix has been conventionally performed in a state of being left standing (stationary fermentation).

Patent Document 1 describes an invention related to a method for producing a drink yogurt, the method including fermenting a raw material containing milk with a lactic acid bacterium capable of producing an extracellular viscous polysaccharide. The method includes: a first stirring step of stirring a fermented product in a curd formation stage in which the pH of the fermented product is between 5.2 and 4.6; a second stirring step of stirring, after the first stirring step, the fermented product at a fermentation end time point when the pH of the fermented product is less than 4.6 and the pH of the fermented product has reached a desired pH; a cooling step; and a third stirring step of stirring the fermented product obtained by the cooling step to adjust the viscosity to a range of 200 to 700 mPa·s.

Prior Art References

Patent documents

Patent Document 1: JP 2018-161114 A

Summary of the Invention

Problem to be solved by the invention

However, when fermented milk having a high protein concentration is produced by fermentation (stationary fermentation) in a state where the raw material mix is left standing, the viscosity after fermentation becomes too high. Thus, it is difficult to perform a treatment such as curd crushing. In addition, even if curd crushing was performed, the viscosity was high. Thus, it was difficult to obtain fermented milk having a low viscosity. Even with the method disclosed in Patent Document 1, it was difficult to obtain fermented milk having a low viscosity.

Therefore, an object of the present invention is to provide a method for producing fermented milk such that fermented milk having a low viscosity and suppressed generation of coarse aggregates can be produced with high productivity.

Means for solving the problem

The present invention provides the following items.
    <1> A method for producing fermented milk, the method including: a fermentation step of adding a milk-fermenting starter to a raw material mix containing raw material milk to ferment a mixture of the raw material mix and the milk-fermenting starter; and a cooling step of cooling a fermented product obtained in the fermentation step, wherein

in the fermentation step, fermentation is performed while flowing the mixture or the fermented product thereof such that a volume-based 90% particle diameter of the mixture or the fermented product thereof does not exceed 125 μm, and
in the cooling step, the fermented product obtained in the fermentation step is cooled while flowing.

<2> The method for producing fermented milk according to <1>, wherein a ratio of the volume-based 90% particle diameter of the fermented product after the cooling step to the volume-based 90% particle diameter of the raw material mix before the fermentation step is 450 or less.

<3> The method for producing fermented milk according to <1> or <2>, wherein the raw material mix has a solid content of 8.0 mass% or more.

<4> The method for producing fermented milk according to any one of <1> to <3>, wherein the raw material mix has a protein content of 5.6 mass% or more.

<5> The method for producing fermented milk according to any one of <1> to <4>, wherein in the fermentation step, fermentation is performed while the mixture or the fermented product thereof is caused to flow so that a Reynolds number of the mixture or the fermented product thereof is from 5 to 250,000, and
in the cooling step, the fermented product obtained in the fermentation step is cooled while flowing so that a Reynolds number of the fermented product is from 10 to 35000.

<6> The method for producing fermented milk according to any one of <1> to <5>, wherein in the fermentation step, fermentation is performed while a shear force applied to the mixture or the fermented product thereof is changed stepwise or continuously between a start of fermentation and an end of fermentation.

<7> The method for producing fermented milk according to <6>, wherein in the fermentation step, when a pH of the fermented product falls below a preset pH of 5.7 to 5.2, the shear force applied to the fermented product is higher than that at a time point when the pH is equal to or higher than the preset pH.

<8> The method for producing fermented milk according to any one of <1> to <7>, wherein the fermentation step is performed until a pH of the fermented product is 4.8 or less and a desired pH is reached.

<9> The method for producing fermented milk according to any one of <1> to <8>, which is a method for producing liquid fermented milk.

<10> A method for producing fermented milk, the method including: a fermentation step of adding a milk-fermenting starter to a raw material mix containing raw material milk to ferment a mixture of the raw material mix and the milk-fermenting starter; and a cooling step of cooling a fermented product obtained in the fermentation step, wherein

in the fermentation step, fermentation is performed while flowing the mixture or the fermented product thereof such that the mixture or the fermented product thereof is homogeneous, and
in the cooling step, the fermented product obtained in the fermentation step is cooled while flowing.

<11> The method for producing fermented milk according to <10>, wherein in the fermentation step, fermentation is performed while flowing the mixture or the fermented product thereof in a fermentation tank so that a viscosity of the mixture or the fermented product thereof is uniform.

<12> The method for producing fermented milk according to <10> or <11>, wherein during the fermentation step, fermentation is performed while flowing the mixture or the fermented product thereof such that a viscosity of each of a site at or near a center of a fermentation tank at a depth of 1/4 from a liquid level in the fermentation tank, a site at or near an inner wall of the fermentation tank at a depth of 1/4 from the liquid level in the fermentation tank, a site at or near the center of the fermentation tank at a depth of 2/4 from the liquid level in the fermentation tank, a site at or near the inner wall of the fermentation tank at a depth of 2/4 from the liquid level in the fermentation tank, a site at or near the center of the fermentation tank at a depth of about 3/4 from the liquid level in the fermentation tank, and a site at or near the inner wall of the fermentation tank at a depth of about 3/4 from the liquid level in the fermentation tank falls within a range of an average value of the viscosities at the respective sites × 80 to 120%.

Effects of the Invention

According to the present invention, fermented milk having a low viscosity and suppressed generation of coarse aggregates can be produced with high productivity.

Modes for Carrying out the Invention

Hereinafter, the content of the present invention will be described in detail. Note that as used herein, the numerical values described before and after "to" in numerical ranges is used to mean including a lower limit value and an upper limit value, respectively.

A method for producing fermented milk according to the present invention includes:

a fermentation step of adding a milk-fermenting starter to a raw material mix containing raw material milk to ferment a mixture of the raw material mix and the milk-fermenting starter; and a cooling step of cooling a fermented product obtained in the fermentation step, wherein
in the fermentation step, fermentation is performed while flowing the mixture or the fermented product thereof such that a volume-based 90% particle diameter of the mixture or the fermented product thereof does not exceed 125 $\mu$m, and
in the cooling step, the fermented product obtained in the fermentation step is cooled while flowing.

In the production method of the present invention, when the mixture of the raw material mix and the milk-fermenting starter is fermented in the fermentation step, fermentation is performed while flowing the mixture or the fermented product thereof such that the volume-based 90% particle diameter of the mixture or the fermented product thereof does not exceed 125 $\mu$m. That is, fermentation is performed while the mixture or the fermented product is caused to flow so as to be uniform. It is presumed that by performing fermentation in this way, the fermentation can proceed while suppressing the formation of curd and the generation of coarse aggregates. Then, it is presumed that the formation of curd and the generation of aggregates during cooling can be suppressed by cooling the fermented product obtained in the fermentation step while flowing. Thus, the production method of the present invention can produce fermented milk having a low viscosity and suppressed generation of coarse aggregates. In addition, the production method of the present invention can produce fermented milk having a low viscosity without performing curd crushing treatment, such as homogenization treatment, after the cooling step since the formation of curd during fermentation or cooling can be suppressed. Therefore, the production process of the fermented milk can be simplified, and the productivity of the fermented milk is excellent. In addition, the production method of the present invention can produce fermented milk having suppressed generation of coarse aggregates. Therefore, the fermented milk obtained by the production method of the present invention has a smooth texture and a good flavor. When the production method of the present invention is applied to a method for producing liquid fermented milk, the effect of the present invention is particularly elicited.

As used herein, the fermented milk refers to a fermented product obtained by culturing a milk-fermenting starter, such as lactic acid bacteria, in a raw material mix containing raw material milk, and may be any of fermented milk, a dairy product lactic acid bacteria beverage, a lactic acid bacteria beverage, or the like as defined by Ministerial Ordinance concerning Milk and the like. Examples of the fermented milk include yogurt. In addition, the liquid fermented milk is fermented milk having fluidity to such an extent that a user can eat and drink by inclining a container without using a spoon or the like. The viscosity of the liquid fermented milk at 10°C is preferably 5000 mPa·s or less, more preferably 2000 mPa·s or less, still more preferably 1000 mPa·s or less, and particularly preferably 700 mPa·s or less. Note that as used herein, the viscosity of the fermented milk is a value measured by a procedure described in Examples described later. In addition, as used herein, the fermented product includes not only one in which fermentation has been completed but also one in the middle of fermentation.

Hereinafter, the present invention will be described in more detail.

First, a raw material mix used in the production method of the present invention will be described. The raw material mix is a raw material preparation obtained by mixing raw materials of fermented milk, and is prepared by optionally adding (blending) a sweetening agent (e.g., water and sugars such as saccharides and/or a sweetener), a stabilizer, a mineral, a fat and oil, an emulsifier, a flavoring agent, an enzyme (e.g., a lactase), and the like to raw material milk, and optionally dissolving the mixture while heating. Examples of the raw material milk include raw milk, pasteurized milk, skim milk, whole milk powder, skimmed milk powder, concentrated whole milk, concentrated skim milk, buttermilk, butter, cream, cheese, milk protein concentrate (MPC), whey protein concentrate (WPC), whey protein isolate (WPI), $\alpha$-lactalbumin ($\alpha$-La), and $\beta$-lactoglobulin ($\beta$-Lg). One or two or more kinds of them may be used.

The raw material mix may consist of raw milk (100% raw milk).

The raw material mix may be subjected to homogenization treatment, heat sterilization treatment, or the like.

When a raw material mix containing a raw material containing fat such as raw milk, cream, butter, or cheese is used, it is preferable to perform a homogenization treatment. By performing the homogenization treatment, the particle diameter of the solid components such as fat spheres contained in the raw material mix can be reduced, and they can be uniformly dispersed in the raw material mix. As the homogenization treatment, for example, known means and conditions such as passing the raw material mix through a narrow gap while pressurizing the raw material mix can be employed. The homogenization treatment is not limited to a treatment using a known homogenizer, and may be a shearing treatment using stirring, a homomixer, an extruder, or the like.

The heat sterilization treatment of the raw material mix can be performed using a known process or apparatus. The heat sterilization treatment may be an indirect heating process or a direct heating process. The heat sterilization treatment can be performed using, for example, a plate heat exchanger, a tube heat exchanger, a steam injection heating apparatus, a steam infusion heating apparatus, an energization heating apparatus, a batch sterilization apparatus (e.g., an emulsifying pot, a kneader, a cooker), or the like. As the heat sterilization treatment conditions, known conditions can be appropriately selected. For example, the heating temperature may be from 70 to 150°C. The heating time may be appropriately adjusted according to the heating temperature. For example, the heating time may be 1 to 300 seconds.

Specific examples of the heat sterilization treatment include: an ultra high temperature instantaneous sterilization (UHT sterilization) method in which heat treatment is performed at 120 to 150°C for 2 to 3 seconds; a high temperature short time sterilization (HTST sterilization) method in which heat treatment is continuously performed at 72 to 75°C for 15 seconds or more; a high temperature holding sterilization (HTLT sterilization) method in which heat treatment is performed at 75°C or higher for 15 minutes or more while holding it; a high temperature short time sterilization (HTST sterilization) method in which heat treatment is continuously performed at 72°C or higher for 15 seconds or more; and an ultra high temperature sterilization (LL sterilization) method in which heat treatment is performed at 135 to 150°C for 1 to 4 seconds. Two or more kinds of these methods may be performed in combination. The heat sterilization treatment is preferably an HTST sterilization method or a UHT sterilization method.

The protein content of the raw material mix is preferably 2.8 mass% or more, more preferably 5.6 mass% or more, still more preferably 8.0 mass% or more, still more preferably 10.0 mass% or more, particularly preferably 11.0 mass% or more, and most preferably 12.0 mass% or more. The upper limit is preferably 35.0 mass% or less, and more preferably 30.0 mass% or less. Fermented milk may be produced using a raw material mix having a high protein content. In this case, strong curd tends to be easily formed during fermentation, and the viscosity tends to greatly increase. However, the production method of the present invention can suppress an increase in the viscosity of finally produced fermented milk and can further suppress generation of coarse aggregates during fermentation even when a raw material mix having a high protein content is used. Therefore, when a raw material mix having a high protein content is used, the effect of the present invention is particularly exhibited.

The solid content of the raw material mix is preferably 8.0 mass% or more, more preferably 10.0 mass% or more, still more preferably 12.5 mass% or more, and still more preferably 15.0 mass% or more. The upper limit is preferably 65.0 mass% or less, and more preferably 55.0 mass% or less.

In the production method of the present invention, a milk-fermenting starter is added to a raw material mix to ferment the raw material mix. The milk-fermenting starter means inoculum, such as lactic acid bacteria and yeast, inoculated to ferment the raw material mix. For the milk-fermenting starter, a known milk-fermenting starter may be used, if appropriate, and a lactic acid bacterium is preferable. The lactic acid bacterium is a generic term for microorganisms that assimilate glucose and produce lactic acid with a yield of 50% or more with respect to sugar, and is a gram-positive coccus or bacillus having characteristics such as no mobility, no sporulation ability, and catalase negative as physiological properties. Examples of the lactic acid bacteria include lactic acid bacteria classified into the genus Lactococcus, Lactobacillus, Leuconostoc, Pediococcus, Streptococcus, Wissella, Tetragenococcus, Oenococcus, Enterococcus, Vagococcus, Carnobacterium, and Bifidobacterium. In the embodiment of the present invention, any of these lactic acid bacteria can be used for the milk-fermenting starter.

The milk-fermenting starter preferably includes at least one lactic acid bacterium selected from the group consisting of Lactobacillus bulgaricus, Streptococcus thermophilus, Lactobacillus casei, Lactobacillus gasseri, Lactobacillus lactis, Lactobacillus plantarum, Lactobacillus acidophilus, and Bifidobacterium, and more preferably includes at least one lactic acid bacterium selected from Lactobacillus bulgaricus, Streptococcus thermophilus, and Lactobacillus casei. As one embodiment, the milk-fermenting starter preferably includes at least one selected from Lactobacillus bulgaricus and Streptococcus thermophilus, and more preferably includes Lactobacillus bulgaricus and Streptococcus thermophilus. As another embodiment, it is preferred that the milk-fermenting starter includes Lactobacillus casei.

Specific examples of Lactobacillus bulgaricus include strain 2038 of Lactobacillus bulgaricus, strain 1589 (NITE BP-03716) of Lactobacillus bulgaricus, and OLL 1073R-1 (FERM P-17227) of Lactobacillus bulgaricus.

The Lactobacillus bulgaricus used may be Lactobacillus delbrueckii subsp. bulgaricus OLL1171, identified by the deposition number NITE BP-01569 (hereinafter referred to as 'strain OLL1171', as applicable), Lactobacillus delbrueckii subsp. bulgaricus OLL1073R-1, identified by the deposition number FERM BP-10741 (hereinafter referred to as 'strain OLL1073R-1', as applicable), Lactobacillus delbrueckii subsp. bulgaricus OLL205013, identified by the deposition number NITE BP-02411 (hereinafter referred to as 'strain OLL205013', as applicable), Lactobacillus delbrueckii subsp. bulgaricus OLL1247, identified by the deposition number NITE BP-01814 (hereinafter referred to as 'strain OLL1247', as applicable), Lactobacillus delbrueckii subsp. bulgaricus OLL1251, identified by the deposition number NITE BP-02703 (hereinafter referred to as 'strain OLL1251', as applicable), or Lactobacillus delbrueckii subsp. bulgaricus 1589, identified by the deposition number NITE BP-03716 (hereinafter referred to as 'strain 1589', as applicable),

The strain OLL1171 is identified as (1) Lactobacillus delbrueckii subsp. bulgaricus OLL1171, (2) Deposition No:

NITE BP-01569, and (3) Deposited Date: March 13, 2013; the strain OLL1073R-1 is identified as (1) Lactobacillus delbrueckii subsp. bulgaricus OLL1073R-1, (2) Deposition No: FERM BP-10741, and (3) Deposited Date: February 22, 1999; the strain OLL205013 is identified as (1) Lactobacillus delbrueckii subsp. bulgaricus OLL205013, (2) Deposition No: NITE BP-02411, and (3) Deposited Date: February 3, 2017; the strain OLL1247 is identified as (1) Lactobacillus delbrueckii subsp. bulgaricus OLL1247, (2) Deposition No: NITE BP-01814, and (3) Deposited Date: March 6, 2014; the strain OLL1251 is identified as (1) Lactobacillus delbrueckii subsp. bulgaricus OLL1251, (2) Deposition No: NITE BP-02703, and (3) Deposited Date: April 25, 2018; and the strain 1589 is identified as (1) Lactobacillus delbrueckii subsp. bulgaricus 1589, (2) Deposition No: NITE BP-03716, and (3) Deposited Date: August 9, 2022. Each strain has been deposited at (4) Depository: the International Patent Organism Depositary of the National Institute of Technology and Evaluation (Room 122, 2-5-8 Kazusakamatari, Kisarazu-shi, Chiba 292-0818, Japan). The Lactobacillus bulgaricus strains identified by these deposition numbers may include subcultures of the same strain, as well as artificially mutated strains, naturally mutated strains, genetically modified strains, or other derivative strains thereof.

As the Lactobacillus bulgaricus, for example, Lactobacillus bulgaricus isolated from commercially available fermented milk on a known agar medium for the genus Lactobacillus (e.g., MRS agar medium, BCP-added plate count agar medium) can also be used. As such Lactobacillus bulgaricus, for example, strain 2038 of Lactobacillus bulgaricus as isolated from "Meiji Bulgaria Yoghurt (registered trademark), manufactured by Meiji Co., Ltd." as fusiform colonies by using a BCP-added plate count agar medium is stored at Meiji Innovation Center, Meiji Co., Ltd. (1-29-1 Nanakuni, Hachioji-shi, Tokyo 192-0919, Japan).

The Lactobacillus bulgaricus used may be a highly polysaccharide-producing lactic acid bacterium. As used herein, the "highly polysaccharide-producing lactic acid bacterium" refers to a lactic acid bacterium capable of producing a large amount of exopolysaccharide (EPS).

Whether or not the Lactobacillus bulgaricus is a highly polysaccharide-producing lactic acid bacterium can be checked, for example, by the method described below. Specifically, for example, measured is the amount of exopolysaccharide (EPS) in a culture medium obtained by culturing the activated Lactobacillus bulgaricus (e.g., a culture medium obtained after activation and culture of a frozen bacterial strain twice in 10w/v% skimmed milk powder medium so as to be 1 platinum loop/5 mL in the 10w/v% skimmed milk powder medium inoculated to be 1 w/w% is subjected to static culture at 37°C for 18 hours) as necessary. Then, when the amount is large, it can be determined that the lactic acid bacterium is a highly polysaccharide-producing lactic acid bacterium. The amount of exopolysaccharide (EPS) can be appropriately measured by a conventionally known method, and examples thereof include a method in which components in 4 mL of a culture medium are dissolved with trichloroacetic acid, the polysaccharide is then precipitated with ethanol and recovered, and if necessary, dialysis against ultrapure water is performed, so that the amount of the resulting polysaccharide is measured by a phenol-sulfuric acid method. For example, as the amount of polysaccharide, when the amount of polysaccharide (mg/kg) in the culture medium as measured by the above method is 70 mg/kg or more, 105 mg/kg or more, 116 mg/kg or more, or 120 mg/kg or more, it can be determined that the lactic acid bacterium is a highly polysaccharide-producing lactic acid bacterium. In addition, for example, when the amount of polysaccharide (mg/kg) measured by the above method exceeds the amount of exopolysaccharide (EPS) in the culture medium in which strain 2038 of Lactobacillus bulgaricus is cultured, more specifically, exceeds 1.0 times or 1.1 times or more the amount of exopolysaccharide (EPS) in the culture medium in which strain 2038 of Lactobacillus bulgaricus is cultured, it may be determined that the lactic acid bacterium is a particularly highly polysaccharide-producing lactic acid bacterium.

Specific examples of the Lactobacillus bulgaricus which is such a highly polysaccharide-producing lactic acid bacterium include strain OLL1251, strain OLL1073R-1, and strain OLL1247.

Specific examples of the Streptococcus thermophilus include strain 1131 of Streptococcus thermophilus and strain 3078 (NITE BP-01697) of Streptococcus thermophilus.

The Streptococcus thermophilus used may be a highly polysaccharide-producing lactic acid bacterium. Whether or not the Streptococcus thermophilus is a highly polysaccharide-producing lactic acid bacterium can be checked, for example, by the method described below. Specifically, for example, measured is the amount of exopolysaccharide (EPS) in a culture medium obtained by culturing the activated Streptococcus thermophilus (e.g., a culture medium obtained after activation and culture of a frozen bacterial strain twice in 10 w/v% skimmed milk powder-0.1 w/v casein-degraded peptide medium so as to be 1 platinum loop/5 mL in the 10 w/v% skimmed milk powder-0.1 w/v casein-degraded peptide medium inoculated to be 1 w/w% is subjected to static culture at 43°C for 4 hours) as necessary. Then, when the amount is large, it can be determined that the lactic acid bacterium is a highly polysaccharide-producing lactic acid bacterium. The amount of exopolysaccharide (EPS) can be appropriately measured by a conventionally known method, and examples thereof include a method in which components in 10 g of a culture medium are dissolved with trichloroacetic acid, the polysaccharide is then precipitated with ethanol and recovered, and if necessary, dialysis against ultrapure water is performed, so that the amount of the resulting polysaccharide is measured by a phenol-sulfuric acid method. For example, as the amount of polysaccharide, when the amount of polysaccharide (mg/kg) in the culture medium as measured by the above method is 3 mg/kg or more, 12 mg/kg or more, 13 mg/kg or more, or 14 mg/kg or more, it can be determined that the lactic acid bacterium is a highly polysaccharide-producing lactic acid bacterium. In addition, for example, when the amount of polysaccharide (mg/kg) measured by the above method exceeds the amount of exopolysaccharide (EPS) in the culture medium in which strain 1131 of Streptococcus thermophilus is cultured, more specifically, exceeds 1.0 times or 1.1 times or more the amount of exopolysaccharide (EPS) in the culture medium in which strain 1131 of Streptococcus thermophilus is cultured, it may be determined that the lactic acid bacterium is a particularly highly polysaccharide-producing lactic acid bacterium.

Specific examples of the Streptococcus thermophilus which is such a highly polysaccharide-producing lactic acid bacterium include strain OLS3290 and strain OLS3078.

Specific examples of the Lactobacillus casei include Lactobacillus casei P2203401.

It is possible to use, as a combination of Lactobacillus bulgaricus and Streptococcus thermophilus in a milk-fermenting starter, lactic acid bacteria isolated from a fermented milk product (e.g., Meiji Bulgaria Yoghurt, Meiji Probio Yoghurt LG 21, Meiji Probio Yoghurt R-1, a desert type of Meiji Bulgaria Yoghurt manufactured by Meiji Co., Ltd.).

The amount of milk-fermenting starter added can be appropriately set according to the addition amount adopted in the known method for producing fermented milk. Also, the method of inoculating a milk-fermenting starter is not particularly limited, and a method commonly used in the production of known fermented milk can be used, if appropriate.

The production method of the present invention includes a fermentation step of adding a milk-fermenting starter to a raw material mix containing raw material milk to ferment a mixture of the raw material mix and the milk-fermenting starter. After adding the milk-fermenting starter to the raw material mix, stirring is preferably performed in order to disperse the milk-fermenting starter in the raw material mix.

In the production method of the present invention, in the fermentation step, fermentation is performed while flowing the raw material mix such that the volume-based 90% particle diameter of the mixture or the fermented product thereof does not exceed 125 $\mu$m. In the fermentation step, it is preferable to perform fermentation while flowing the raw material mix so that the volume-based 90% particle diameter of the mixture or the fermented product thereof does not exceed 125 $\mu$m between the start of fermentation and the end of fermentation. The start of fermentation refers to the time point when the milk-fermenting starter is added to the raw material mix. Note that by mixing the raw material mix and the milk-fermenting starter, the fermentation of the raw material mix may proceed by the milk-fermenting starter. Therefore, the "fermented product" in the fermentation step refers to a product obtained by culturing a milk-fermenting starter in a raw material mix for fermentation, and is a product in the middle of fermentation.

As used herein, the wording "performing fermentation while flowing the mixture or the fermented product thereof" means performing fermentation while flowing the mixture or the fermented product thereof. The method for flowing the mixture or the fermented product thereof is not particularly limited as long as in the method, a shear force is applied to the mixture or the fermented product thereof. Stirring is preferred. In the fermentation step, it is preferable to perform fermentation while stirring the mixture or the fermented product thereof, and it is more preferable to perform fermentation while stirring the mixture or the fermented product thereof so that the mixture or the fermented product thereof is homogeneous.

Note that as used herein, stirring means an operation of stirring an object by a machine or the like. Specifically, it means an operation of stirring an object while applying a shear force to the object by using a stirrer, a mixer, or the like. The mixture or the fermented product thereof can be stirred using, for instance, a stirrer, a mixer, a food cutter, a kneader, a turbo mixer, a kneader, or a combination thereof. Examples of the shape of the stirring blade of the stirrer include, but are not particularly limited to, paddle blades (e.g., flat paddle blades, inclined paddle blades, disk turbine blades), propeller blades, turbine blades, anchor blades, helical ribbon blades, and screw blades. In addition, a stirring blade having a shape other than these may be used. A plurality of these stirring blades may be used in combination.

When fermentation is performed while stirring to ensure uniformity of the mixture or the fermented product thereof, it is preferable to perform fermentation while stirring in such a manner that the mixture or the fermented product thereof does not remain stagnant or settle in the fermentation tank. As one embodiment, stirring is performed during fermentation so that the viscosity of the mixture or the fermented product thereof in the fermentation tank is substantially uniform. For example, the liquid depth of the mixture or the fermented product thereof in the fermentation tank may be less than 60 cm. In this case, when the viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank is in the range of the average value of the viscosities of these sites × 80 to 120%, it can be said that the mixture or the fermented product thereof in the fermentation tank is homogeneous. In addition, for example, the liquid depth of the mixture or the fermented product thereof in the fermentation tank may exceed 60 cm. In this case, when the viscosity of each of a site at or near the center of the fermentation tank at a depth of about 15 cm from the liquid level in the fermentation tank and a site at or near the inner wall of the fermentation tank at a depth of about 15 cm from the liquid level in the fermentation tank is in the range of the average value of the viscosities of these sites × 80 to 120%, it can be said that the mixture or the fermented product thereof in the fermentation tank is homogeneous.

Examples of one preferred embodiment include an embodiment in which fermentation is performed while flowing the mixture or the fermented product thereof such that the viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank is in the range of the average value of the viscosities of these sites × 80 to 120%. In this embodiment, the liquid depth of the mixture or the fermented product thereof in the fermentation tank is preferably less than 60 cm.

Examples of one preferred embodiment include an embodiment in which fermentation is performed while flowing the mixture or the fermented product thereof such that the viscosity of each of a site at or near the center of the fermentation tank at a depth of about 15 cm from the liquid level in the fermentation tank and a site at or near the inner wall of the fermentation tank at a depth of about 15 cm from the liquid level in the fermentation tank is in the range of the average value of the viscosities of these sites × 80 to 120%. In this embodiment, the liquid depth of the mixture or the fermented product thereof in the fermentation tank preferably exceeds 60 cm.

Examples of another preferred embodiment include an embodiment in which during the fermentation step, fermentation is performed while flowing the mixture or the fermented product thereof such that the viscosity of each of a site at or near a center of a fermentation tank at a depth of 1/4 from a liquid level in the fermentation tank, a site at or near an inner wall of the fermentation tank at a depth of 1/4 from the liquid level in the fermentation tank, a site at or near the center of the fermentation tank at a depth of 2/4 from the liquid level in the fermentation tank, a site at or near the inner wall of the fermentation tank at a depth of 2/4 from the liquid level in the fermentation tank, a site at or near the center of the fermentation tank at a depth of about 3/4 from the liquid level in the fermentation tank, and a site at or near the inner wall of the fermentation tank at a depth of about 3/4 from the liquid level in the fermentation tank falls within the range of the average value of these viscosities at the respective sites × 80 to 120%.

In the fermentation step, it is also preferable to perform fermentation while stirring the mixture or the fermented product thereof so as to generate a vertical circulation flow. According to this embodiment, the mixture or the fermented product thereof can be stirred in the fermentation tank without stagnation, and the mixture or the fermented product thereof in the fermentation tank can be stirred so as to be homogeneous. In particular, when a raw material mix having a high protein concentration is used, the viscosity tends to increase during fermentation, but by stirring in this way, an increase in viscosity during fermentation can be effectively suppressed.

In the fermentation step, it is also preferable to stir the mixture or the fermented product thereof so that the flow rate of the mixture or the fermented product thereof in the fermentation tank is substantially uniform. According to this embodiment, the mixture or the fermented product thereof can be stirred in the fermentation tank without stagnation, and the mixture or the fermented product thereof in the fermentation tank can be stirred so as to be homogeneous. In particular, when a raw material mix having a high protein concentration is used, the viscosity tends to increase during fermentation, but by stirring in this way, an increase in viscosity during fermentation can be effectively suppressed.

The volume-based 90% particle diameter of the mixture or the fermented product thereof during the fermentation step is preferably 120 μm or less, more preferably 100 μm or less, still more preferably 80 μm or less, and particularly preferably 60 μm or less. Note that the volume-based 90% particle diameter refers to a particle diameter corresponding to 90% of an integrated distribution curve obtained from the volume-based particle size distribution of the measurement sample. As used herein, the volume-based particle size distribution of the measurement sample is determined by a laser diffraction scattering method. The particle size distribution analyzer used may be a particle size distribution analyzer using a laser diffraction scattering method. Examples thereof include LS 13 320 manufactured by Beckman Coulter.

In the fermentation step, it is preferable to perform fermentation while flowing (preferably stirring) the mixture or the fermented product thereof so that the Reynolds number is from 5 to 250,000. The upper limit of the Reynolds number during the fermentation step is preferably 200,000 or less, and more preferably 170,000 or less. The lower limit of the Reynolds number is preferably 7.5 or more, and more preferably 10 or more.

Note that the Reynolds number is a value calculated from the following:

$$\text{Reynolds number} = \text{Inertia force/Viscous force}$$

For example, in the case of stirring in a fermenter, the Reynolds number is calculated from the following formula:

$$\text{Reynolds number Re} = d^2 \times n \times \rho/\mu, \text{ where}$$

d: blade diameter (m);
n: rotation speed (rps);
$\rho$: density (kg/m$^3$); and
$\mu$: viscosity (Pa·s).

In the fermentation step, fermentation is preferably performed while a shear force applied to the mixture or the fermented product thereof is changed stepwise or continuously between the start of fermentation and the end of fermentation. When a strong shear force is applied for a long time during fermentation, fermentation may be delayed, resulting in a long fermentation time. However, by performing fermentation while changing the shear force stepwise or continuously, it is possible to suppress application of too strong shear force to the mixture or the fermented product thereof. Therefore, it is possible to suppress the formation of curd during fermentation while suppressing a fermentation delay. Thus, fermented milk having a low viscosity and suppressed generation of coarse aggregates can be produced more efficiently. More specifically, when the viscosity of the fermented product increases during fermentation, it is preferable to increase the shear force applied to the fermented product stepwise or continuously. This embodiment can further effectively suppress the formation of curd during fermentation. In addition, when the viscosity of the fermented product decreases during fermentation, it is preferable to gradually or continuously decrease the shear force applied to the fermented product. According to this embodiment, entrainment of bubbles during fermentation can be suppressed, and energy efficiency can be improved.

As a preferred embodiment in the fermentation step, when the pH of the fermented product falls below a preset pH of 5.7 to 5.2, the shear force applied to the fermented product is preferably higher than that at a time point when the pH is equal to or higher than the preset pH. This embodiment can further effectively suppress the formation of curd during fermentation.

Examples of a method of changing the shear force applied to the mixture or the fermented product thereof stepwise or continuously include the following method in which fermentation is performed while stirring the mixture or the fermented product thereof as described as an example.

As one embodiment, there is a method of changing a driving force such as a rotation speed or a peripheral speed of a stirring blade or a mixer.

As another embodiment, there is a method of using a stirrer equipped with a plurality of stirring means such as a multifunctional stirrer equipped with a mixer and stirring blades, and changing the type of stirring means to be driven or a combination thereof. As an example of the operation in the case of using a multifunctional stirrer including a mixer and stirring blades, there is a method of performing stirring only with the stirring blades when the viscosity is low, and performing stirring by driving the mixer while stopping the stirring blades or performing stirring with the stirring blades when the viscosity increases. Also in this case, the driving force such as the rotation speed and the peripheral speed of the stirring blades and the mixer may be changed.

The fermentation temperature in the fermentation step can be appropriately selected depending on the species of milk-fermenting starter. For example, it can be performed within a temperature range of 25 to 50°C. When mesophilic bacteria are used for the milk-fermenting starter, the fermentation temperature is preferably 25 to 35°C. When thermophilic bacteria are used for the milk-fermenting starter, the fermentation temperature is preferably 35 to 45°C.

The fermentation step is preferably performed until the pH of the fermented product is 4.8 or less (more preferably 4.7 or less, still more preferably 4.6 or less, and still more preferably 4.4 or less) and reaches a desired pH. This embodiment should elicit a dispersion effect by an electric repulsive force due to the protein charge.

In the fermentation step, it is preferable to continuously flow (preferably stir) the mixture or the fermented product thereof, but stirring may be intermittently stopped for a short time (e.g., a time of 10% or less, a time of 5% or less, a time of 1% or less, or the like of the entire time required for the fermentation step). In the fermentation step, it is particularly preferable to cause the mixture or the fermented product thereof to flow (preferably, to stir) for a time exceeding 90% of the time required for the fermentation step (preferably more than 95% time, more preferably more than 99% time).

The production method of the present invention includes a cooling step of cooling the fermented product obtained in the fermentation step. In the production method of the present invention, in the cooling step, the fermented product obtained in the fermentation step is cooled while flowing.

As used herein, the wording "cooling the fermented product while flowing the fermented product obtained in the fermentation step" means cooling the fermented product while allowing the fermented product obtained in the fermentation step to flow. The method of flowing the fermented product during the cooling step is not particularly limited as long as the method includes applying a shear force to the fermented product. Stirring is preferred.

In the cooling step, it is preferable to perform fermentation while flowing (preferably stirring) the fermented product so that the Reynolds number is from 10 to 35,000. The upper limit of the Reynolds number during the cooling step is preferably 33,000 or less, and more preferably 32,000 or less. The lower limit of the Reynolds number is preferably 12.5 or more, and more preferably 15.0 or more.

In the cooling step, cooling may be performed while a shear force applied to the fermented product is changed stepwise or continuously between the start of cooling and the end of cooling. When cooling is performed while changing the shear force, bubble entrainment can be suppressed, and energy efficiency can be improved.

In the cooling step, it is preferable to cool the fermented product to a temperature of 15°C or lower. The temperature is preferably 10°C or lower. The lower limit of the temperature is not particularly limited, but may be -5°C or higher, or 0°C or higher. The cooling time varies depending on conditions such as the cooling temperature, the amount of the fermented product, and the cooling method, and may be, for example, 1 to 24 hours.

In the production method of the present invention, the ratio of the volume-based 90% particle diameter of the fermented product after the cooling step to the volume-based 90% particle diameter of the raw material mix before the fermentation step is preferably 450 or less, more preferably 300 or less, still more preferably 150 or less, still more preferably 100 or less, and particularly preferably 80 or less.

In the production method of the present invention, the viscosity of the fermented product (fermented milk) after the cooling step may be adjusted by stirring or homogenizing the fermented product. In addition, the fermented product may be admixed (stirred) with additives such as a sweetening agent, pulp, fruit juice, a sauce, an acidulant, a flavor, a stabilizer, and/or a viscosity modifier. According to the production method of the present invention, fermentation can proceed while suppressing the formation of curd and the generation of coarse aggregates. Thus, the fermented product after the cooling step has a low viscosity without stirring or homogenizing treatment such as curd crushing. Therefore, even when stirring or homogenizing treatment for adjusting the viscosity is performed, the viscosity can be adjusted to a desired viscosity by stirring or homogenizing treatment in a short time. In addition, even when mixing with other additives, the mixture can be uniformly mixed in a short time.

Such a step may be performed to produce a fermented product, namely fermented milk.

The viscosity of the fermented milk, which can be obtained by the production method of the present invention, at 10°C is preferably 5000 mPa·s or less, more preferably 2000 mPa·s or less, still more preferably 1000 mPa·s or less, and particularly preferably 700 mPa·s or less. The viscosity of the fermented milk is a value measured by a procedure described in Examples described later.

The hardness of the fermented milk, which can be obtained by the production method of the present invention, at 10°C is preferably 0.1 N or less, more preferably 0.05 N or less, still more preferably 0.025 N or less, and particularly preferably 0.015 N or less. The hardness of the fermented milk can be measured by a compression test method.

The Bostwick viscosity at 10°C of the fermented milk obtained by the production method of the present invention is preferably 10 cm/10 seconds or more, more preferably 12.5 cm/10 seconds or more, and still more preferably 15 cm/10 seconds or more. The Bostwick viscosity of the fermented milk can be measured using a Bostwick viscometer.

The number-based 50% particle diameter of the fermented milk obtained by the production method of the present invention is preferably 1.0 $\mu$m or less, more preferably 0.5 $\mu$m or less, and still more preferably 0.1 $\mu$m or less, because fermented milk having a smoother texture such as a smoother touch on the tongue can be obtained.

The number-based 90% particle diameter of the fermented milk obtained by the production method of the present invention is preferably 2.0 $\mu$m or less, more preferably 1.0 $\mu$m or less, still more preferably 0.5 $\mu$m or less, and particularly preferably 0.2 $\mu$m or less because fermented milk having a smoother texture such as a smoother touch on the tongue can be obtained.

The number-based mode diameter of the fermented milk obtained by the production method of the present invention is preferably 1.0 $\mu$m or less, more preferably 0.5 $\mu$m or less, and still more preferably 0.1 $\mu$m or less, because the particle diameter is small and uniform and fermented milk having a smoother texture such as a smoother touch on the tongue can be obtained.

The ratio of the number-based 90% particle diameter to the number-based 50% particle diameter (= number-based 90% particle diameter/number-based 50% particle diameter) of the fermented milk obtained by the production method of the present invention is preferably 1.0 to 5.0, more preferably 1.0 to 3.0, and still more preferably 1.0 to 2.0 because the particle diameter is small and uniform and fermented milk having a much smoother texture such as a smoother touch on the tongue can thus be obtained.

The absolute value of the difference between the number-based 50% particle diameter and the number-based mode diameter of the fermented milk obtained by the production method of the present invention is preferably 1.0 $\mu$m or less, more preferably 0.5 $\mu$m or less, and still more preferably 0.1 $\mu$m or less, because fermented milk having a smoother texture such as a smoother touch on the tongue can be obtained.

The absolute value of the difference between the number-based 90% particle diameter and the number-based mode diameter of the fermented milk obtained by the production method of the present invention is preferably 5.0 $\mu$m or less, more preferably 0.5 $\mu$m or less, and still more preferably 0.2 $\mu$m or less, because fermented milk having a smoother texture such as a smoother touch on the tongue can be obtained.

In the fermented milk obtained by the production method of the present invention, the ratio of the value of the difference between the number-based 90% particle diameter and the number-based 10% particle diameter to the number-based 50% particle diameter (= (number-based 90% particle diameter - number-based 10% particle diameter)/number-based 50% particle diameter) is preferably 0.8 to 2.0 because fermented milk having a smoother texture such as a smoother touch on the tongue can be obtained. The upper limit is preferably 1.5 or less, and more preferably 1.4 or less. The lower limit is preferably 0.9 or more, and more preferably 0.93 or more.

Note that the number-based 10% particle diameter means a particle diameter corresponding to 10% of an integrated distribution curve obtained from the number-based particle size distribution of a measurement sample; the number-based 50% particle diameter means a particle diameter corresponding to 50% of the integrated distribution curve obtained from the number-based particle size distribution of the measurement sample; the number-based 90% particle diameter means a particle diameter corresponding to 90% of the integrated distribution curve obtained from the number-based particle size distribution of the measurement sample; and the number-based mode diameter means a particle diameter of the highest frequency in the peak in the number-based particle size distribution of the measurement sample. The number-based particle size distribution of the measurement sample is determined by a laser diffraction scattering method. The particle size distribution analyzer used may be a particle size distribution analyzer using a laser diffraction scattering method. Examples thereof include LS 13 320 manufactured by Beckman Coulter.

The average aspect ratio of the protein particles contained in the fermented milk obtained by the production method of the present invention is preferably 1.0 to 1.7, more preferably 1.0 to 1.6, still more preferably 1.0 to 1.5, still more preferably 1.0 to 1.4, and particularly preferably 1.0 to 1.3. When the average aspect ratio of the protein particles is within the above range, the storage stability of the fermented milk can be further improved. Furthermore, it is also possible to improve the texture such as the touch on the tongue.

In the present specification, the aspect ratio of the protein particle is a ratio of the long diameter to the short diameter of the protein particle (= the long diameter of the protein particle/the short diameter of the protein particle). In addition, among diameters passing through the center of the protein particle, the longest diameter is referred to as a major diameter, and the shortest diameter is referred to as a minor diameter. For example, in the case of an ellipse, the major axis is the major diameter and the minor axis is the minor diameter. The aspect ratio of the protein particle can be determined by performing image analysis on an image photographed using, for instance, a scanning electron microscope (SEM). The image may be analyzed using known image analysis software. Examples of the image analysis software include ImageJ Fiji. In addition, as used herein, the average aspect ratio of protein particles is an arithmetic mean of aspect ratios of arbitrarily selected 30 protein particles observed in an image.

The coefficient of variation of the aspect ratio of the protein particles is preferably 40% or less, more preferably 35% or less, still more preferably 30% or less, and particularly preferably 25% or less. When the coefficient of variation of the aspect ratio of the protein particles is within the above range, the storage stability of the fermented milk can be further improved. Furthermore, it is also possible to improve the texture such as the touch on the tongue.

The coefficient of variation of the aspect ratio of the protein particle is defined by the following formula.

Coefficient of variation of aspect ratio of protein particles = (standard deviation of aspect ratio of protein particles/arithmetic mean of aspect ratio of protein particles) $\times$ 100.

The average circularity of the protein particles is preferably 0.6 or more, more preferably 0.65 or more, still more preferably 0.70 or more, and particularly preferably 0.75 or more. The upper limit of the average circularity is preferably 1.2 or less, more preferably 1.15 or less, and still more preferably 1.1 or less. When the average circularity of the protein particles is within the above range, the storage stability of the fermented milk can be further improved. Furthermore, it is also possible to improve the texture such as the touch on the tongue.

As used herein, the circularity of the protein particle is a value defined by the following formula.

$$\text{Circularity} = 4\pi \times \text{Area of protein particle}/(\text{Perimeter of protein particle})^2.$$

The closer the circularity of a protein particle is to 1, the closer the protein particle is to a perfect circle. The area and perimeter of each protein particle can be determined by performing image analysis on an image taken using a scanning electron microscope (SEM) or the like. The image may be analyzed using known image analysis software. Examples of the image analysis software include ImageJ Fiji. In addition, as used herein, the average circularity of the protein particles is an arithmetic mean of the circularity of arbitrarily selected 30 protein particles observed in an image.

The coefficient of variation of the circularity of the protein particles is preferably 40% or less, more preferably 35% or less, still more preferably 30% or less, still more preferably 25% or less, still more preferably 20% or less, and particularly preferably 15% or less. When the coefficient of variation of the circularity of the protein particles is within the above range, the storage stability of the fermented milk can be further improved. Furthermore, it is also possible to improve the texture such as the touch on the tongue.

The protein content of the fermented milk obtained by the production method of the present invention is preferably 2.8 mass% or more, more preferably 5.6 mass% or more, still more preferably 8.0 mass% or more, still more preferably 10.0 mass% or more, particularly preferably 11.0 mass% or more, and most preferably 12.0 mass% or more. The upper limit is preferably 35.0 mass% or less, and more preferably 30.0 mass% or less.

The solid content of the fermented milk obtained by the production method of the present invention is preferably 8.0 mass% or more, more preferably 10.0 mass% or more, still more preferably 12.5 mass% or more, and still more preferably 15.0 mass% or more. The upper limit is preferably 65.0 mass% or less, and more preferably 55.0 mass% or less.

The fermented milk obtained by the production method of the present invention is preferably liquid fermented milk. Examples of the liquid fermented milk include drink yogurt. The drink yogurt refers to a beverage type yogurt, and is a yogurt having fluidity enough to be able to eat and drink it without using a spoon or the like by inclining a container. That is, the fermented milk obtained by the production method of the present invention can be filled into an individual container for distribution such as a pack, a bottle, or a jar, and provided as a drink yogurt in the form of a final product. Since the fermented milk obtained by the production method of the present invention has a low viscosity and a smooth texture, the fermented milk has good throat penetration and mouth feel, and is particularly preferably used as a drink yogurt in the form of a final product.

The fermented milk obtained by the production method of the present invention can also be used as a raw material for beverages, confectionery, ice cream, bakery products, nutritional foods, processed foods using milk or yogurt as a raw material, supplements, and the like.

Examples

Hereinafter, the present invention will be described more specifically with reference to Examples. Materials, amounts used, proportions, processing contents, processing procedures and the like described in the following Examples can be appropriately changed without departing from the gist of the present invention. Therefore, the scope of the present invention should not be limited to the following specific Examples.

<How to measure particle diameter>

The volume-based 90% particle diameter of each measurement sample was determined by measuring a volume-based particle size distribution of the measurement sample by a laser diffraction scattering method using a particle size distribution analyzer (LS 13 320 manufactured by Beckman Coulter, Inc.).

The number-based 10% particle diameter, the number-based 50% particle diameter, the number-based 90% particle diameter, and the number-based mode diameter of the measurement sample were determined by measuring a number-based particle size distribution of the measurement sample by a laser diffraction scattering method using a particle size distribution analyzer (LS 13 320 manufactured by Beckman Coulter, Inc.).

<How to measure viscosity>

The viscosity of each measurement sample was measured by the following procedure.

A measurement sample was put in a sterile test cup (BE2200 manufactured by EIKEN CHEMICAL CO., LTD.; cup size: upper diameter 58 mm, lower diameter 56 mm, height 72 mm, volume 100 ml) in such an amount that the height of the liquid level in the cup became about 60 mm; each of the lower portion (position about 55 mm deep from the liquid level), the middle portion (position about 1/2 deep from the liquid level), and the upper portion (position about 20 mm deep from the liquid level) of the measurement sample in the cup was stirred for 30 seconds using a three-one motor (Model number: BL1200, manufactured by Shinto Scientific Co., Ltd.; radius of stirring blade: 20 mm) at a peripheral speed of 0.8 m/s and a rotation speed of 400 rpm; thereafter, the stirring blades were reversely rotated, and the lower portion, the middle portion, and the upper portion of the measurement sample in the cup were stirred for 30 seconds each to perform pretreatment. For the measurement sample after pretreatment, an M2 rotor, an M3 rotor, or an M4 rotor was inserted into the measurement sample and rotated (at 30 rpm for 30 seconds) at a measurement temperature of 10°C while using a rotary B-type viscometer (TVB25-type viscometer, manufactured by TOKISANGYO). As the rotor, the M2 rotor was used when the viscosity of the measurement sample was 500 mPa·s or less, the M3 rotor was used when the viscosity of the measurement sample was 500 to 4000 mPa·s, and the M4 rotor was used when the viscosity of the measurement sample was 4000 mPa·s or more.

<How to measure hardness>

The hardness of each measurement sample was measured by performing a compression test using a strength tester (EZ-SX manufactured by Shimadzu Corporation). Specifically, measurement was performed by the following procedure.

A measurement sample was put in a sterile test cup (BE2200 manufactured by EIKEN CHEMICAL CO., LTD.; cup size: upper diameter 58 mm, lower diameter 56 mm, height 72 mm, volume 100 ml) in such an amount that the height of the liquid level in the cup became about 60 mm; an upper platen (diameter 10 mm; part number 346-51687-04) was placed on a surface of the measurement sample; and a compression test was performed at a down test speed of 1.0 mm/sec, a stroke of 10 mm, an up test speed of 1.0 mm/sec, and a stroke of 15 mm to measure the hardness (N).

<How to measure Bostwick viscosity>

The Bostwick consistmeter of each measurement sample was measured using a Bostwick viscometer. Specifically, the Bostwick viscometer was horizontally adjusted with a level adjuster, the gate was closed, and the reservoir portion in front of the gate was filled with the measurement sample adjusted to 10°C. Then, 10 seconds after the trigger was pushed down and the gate was opened, the length of the flow of the measurement sample was measured to determine the Bostwick viscosity.

<Production Example of raw material mix>

(Production Example 1)

Skimmed milk powder (manufactured by Meiji Co., Ltd.), a milk protein powder raw material (MPC4867, manufactured by Fonterra), and raw water were mixed to produce a raw material mix having a fat concentration of 0.4 mass%, a protein concentration of 18.1 mass%, and a solid content of 33.3 mass%. This raw material mix was sterilized at 85°C for 120 seconds to produce a raw material mix of Production Example 1. The volume-based 90% particle diameter of the raw material mix of Production Example 1 was 10.45 $\mu$m.

(Production Example 2)

Skimmed milk powder (manufactured by Meiji Co., Ltd.), a milk protein powder raw material (MPC4867, manufactured by Fonterra), cow milk (manufactured by Meiji Co., Ltd.), cream (manufactured by Meiji Co., Ltd.), and raw water were mixed to produce a raw material mix having a fat concentration of 10.0 mass%, a protein concentration of 13.0 mass%, and a solid content of 40.5 mass%. This raw material mix was heated to 60°C, and then homogenized using a homogenizer (Homogenizer NS3015H manufactured by GEA). The homogenization treatment was performed under conditions at a primary pressure of 10 MPa and a secondary pressure of 5 MPa. The raw material mix after the homogenization treatment was sterilized at 85°C for 120 seconds to produce a raw material mix of Production Example 2. The volume-based 90% particle diameter of the raw material mix of Production Example 2 was 1.40 $\mu$m.

(Production Example 3)

Skimmed milk powder (manufactured by Meiji Co., Ltd.), a milk protein powder raw material (MPC4850, manufactured by Fonterra), cow milk (manufactured by Meiji Co., Ltd.), and raw water were mixed to produce a raw material mix having a fat concentration of 3.4 mass%, a protein concentration of 13.6 mass%, and a solid content of 36.6 mass%. This raw material mix was sterilized at 85°C for 120 seconds to produce a raw material mix of Production Example 3. The volume-based 90% particle diameter of the raw material mix of Production Example 3 was 1.44 $\mu$m.

(Production Example 4)

Skimmed concentrated milk (manufactured by Meiji Co., Ltd.), whey protein powder (YO8075, manufactured by Arla Foods), and raw water were mixed to produce a raw material mix having a fat concentration of 0.3 mass%, a protein concentration of 11.5 mass%, and a solid content of 29.3 mass%. This raw material mix was sterilized at 85°C for 120 seconds to produce a raw material mix of Production Example 4. The volume-based 90% particle diameter of the raw material mix of Production Example 4 was 82.82 $\mu$m.

(Production Example 5)

Skimmed concentrated milk (manufactured by Meiji Co., Ltd.), a milk protein powder raw material (MPC4882, manufactured by Fonterra), and raw water were mixed to produce a raw material mix having a fat concentration of 0.3 mass%, a protein concentration of 10.9 mass%, and a solid content of 28.4 mass%. This raw material mix was sterilized at 85°C for 120 seconds to produce a raw material mix of Production Example 5. The volume-based 90% particle diameter of the raw material mix of Production Example 5 was 0.37 $\mu$m.

(Production Example 6)

Skimmed concentrated milk (manufactured by Meiji Co., Ltd.) and raw water were mixed to produce a raw material mix having a fat concentration of 0.3 mass%, a protein concentration of 10.2 mass%, and a solid content of 28.0 mass%. This raw material mix was sterilized at 85°C for 120 seconds to produce a raw material mix of Production Example 6. The volume-based 90% particle diameter of the raw material mix of Production Example 6 was 0.21 μm.

<Method for producing fermented milk>

(Example 1)

In a fermentation tank having a capacity of 3.5 L, 2500 g of the raw material mix of Production Example 1 was placed, and strain 2038 of Lactobacillus bulgaricus and strain 1131 of Streptococcus thermophilus were each added as a milk-fermenting starter in an amount of 2.0 mass% of the raw material mix, and fermentation was performed while stirring a mixture of the raw material mix and the milk-fermenting starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites × 80 to 120%.

Next, the fermented product after completion of fermentation was cooled until the temperature of the fermented product reached the product temperature shown in the following table while being stirred at the stirring rotational speed shown in the following table (cooling step) to produce fermented milk.

Note that in the fermentation step and the cooling step, stirring was performed using a stirring blade having a blade diameter of 0.15 m and a rotation radius of 0.075 m. The volume-based 90% particle diameter of the raw material mix during the fermentation step was 125 μm or less.

The obtained fermented milk was liquid fermented milk. In addition, the fermented milk had a volume-based 90% particle diameter of 32.40 μm, a number-based 10% particle diameter of 0.055 μm, a number-based 50% particle diameter of 0.084 μm, a number-based 90% particle diameter of 0.146 μm, a number-based mode diameter of 0.073 μm, a hardness at 10°C of less than 0.0092 N, a viscosity at 10°C of 310 mPa·s, and a Bostwick viscosity at 10°C of 21.5 cm/10 seconds. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 1]

|  | Time (min) | Stirring rotation speed (rpm) | pH | Reynolds number | Product temperature (°C) |
|---|---|---|---|---|---|
| Fermentation step | 0 (Start of fermentation) | 76 | 6.19 | 34 | 40.5 |
|  | 120 | 80 | 5.49 | - | 42.5 |
|  | 150 | 76 | 5.28 | - | 43.0 |
|  | 157 | 60 | - | - | 42.9 |
|  | 159 | 76 | - | - | 43.0 |
|  | 164 | 80 | - | - | 43.1 |
|  | 170 | 84 | - | - | 43.1 |
|  | 180 | 80 | 5.14 | - | 43.1 |
|  | 188 | 76 | - | - | 42.5 |
|  | 240 | 76 | 4.97 | - | 43.2 |
|  | 267 | 80 | - | - | 41.9 |
|  | 360 | 80 | 4.82 | - | 41.9 |
|  | 480 | 84 | 4.68 | - | 42.3 |
|  | 510 (End of fermentation) | 84 | 4.65 | 16 | 42.3 |
| Cooling step | Start of cooling | 84 | 4.65 | 16 | 42.3 |
|  | End of cooling | 84 | 4.65 | 108 | 6.8 |

(Example 2)

In a fermentation tank having a capacity of 89.1 L, 60,000 g of the raw material mix of Production Example 2 was placed, and strain 2038 of Lactobacillus bulgaricus and strain 1131 of Streptococcus thermophilus were each added as a milk-fermenting starter in an amount of 2.0 mass% of the raw material mix, and fermentation was performed while stirring a mixture of the raw material mix and the raw material starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites $\times$ 80 to 120%.

Next, the fermented product after completion of fermentation was cooled until the temperature of the fermented product reached the product temperature shown in the following table while being stirred at the stirring rotational speed shown in the following table (cooling step) to produce fermented milk. Note that in the fermentation step and the cooling step, stirring was performed using a stirring blade having a blade diameter of 0.42 m and a rotation radius of 0.21 m. The volume-based 90% particle diameter of the raw material mix during the fermentation step was 125 $\mu$m or less.

The obtained fermented milk was liquid fermented milk. In addition, the fermented milk had a volume-based 90% particle diameter of 26.78 $\mu$m, a number-based 10% particle diameter of 0.058 $\mu$m, a number-based 50% particle diameter of 0.091 $\mu$m, a number-based 90% particle diameter of 0.178 $\mu$m, a number-based mode diameter of 0.081 $\mu$m, a hardness at 10°C of less than 0.0117 N, and a viscosity at 10°C of 295 mPa·s. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 2]

|  | Time (min) | Stirring rotation speed (rpm) | pH | Reynolds number | Product temperature (°C) |
|---|---|---|---|---|---|
| Fermentation step | 0 (Start of fermentation) | 50 | 6.21 | 1157 | 43.1 |
|  | 60 | 50 | 6.16 | 1817 | 43.0 |
|  | 90 | 50 | 6.12 | 1929 | 43.1 |
|  | 120 | 50 | 5.97 | 1756 | 43.0 |
|  | 150 | 50 | 5.75 | 2232 | 43.1 |
|  | 180 | 50 | 5.57 | 1240 | 43.0 |
|  | 210 | 50 | 5.45 | 243 | 43.1 |
|  | 240 | 50 | 5.35 | 50 | 43.1 |
|  | 270 | 70 | 5.26 | 46 | 43.0 |
|  | 300 | 70 | 5.18 | 34 | 43.1 |
|  | 330 | 70 | 5.13 | 29 | 43.2 |
|  | 360 | 70 | 5.07 | 31 | 43.1 |
|  | 390 | 70 | 5.02 | 30 | 43.0 |
|  | 420 | 70 | 4.99 | 32 | 43.1 |
|  | 460 | 70 | 4.97 | 30 | 43.1 |
|  | 490 | 70 | 4.94 | 37 | 43.1 |
|  | 510 | 70 | 4.94 | 35 | 43.1 |
|  | 570 | 70 | 4.88 | 38 | 43.1 |
|  | 630 | 70 | 4.86 | 37 | 43.2 |
|  | 690 | 70 | 4.83 | 42 | 43.2 |
|  | 720 | 70 | 4.80 | 33 | 43.1 |

(continued)

|  | Time (min) | Stirring rotation speed (rpm) | pH | Reynolds number | Product temperature (°C) |
|---|---|---|---|---|---|
|  | 750 | 70 | 4.79 | 34 | 43.1 |
|  | 780 (End of fermentation) | 70 | 4.77 | 35 | 43.0 |
| Cooling step | Start of cooling | 70 | 4.77 | 35 | 43.0 |
|  | End of cooling | 70 | 4.77 | 1057 | 8.5 |

(Example 3)

In a fermentation tank having a capacity of 5 L, 3500 g of the raw material mix of Production Example 3 was placed, and strain 1589 of Lactobacillus bulgaricus and strain 3078 of Streptococcus thermophilus were each added as a milk-fermenting starter in an amount of 2.0 mass% of the raw material mix, and fermentation was performed while stirring a mixture of the raw material mix and the milk-fermenting starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites $\times$ 80 to 120%.

Next, the fermented product after completion of fermentation was cooled until the temperature of the fermented product reached the product temperature shown in the following table while being stirred at the stirring rotational speed shown in the following table (cooling step) to produce fermented milk. Note that in the fermentation step and the cooling step, stirring was performed using a stirring blade having a blade diameter of 0.17 m and a rotation radius of 0.085 m. The volume-based 90% particle diameter of the raw material mix during the fermentation step was 125 $\mu$m or less.

The obtained fermented milk was liquid fermented milk. In addition, the fermented milk had a volume-based 90% particle diameter of 21.42 $\mu$m, a number-based 10% particle diameter of 0.055 $\mu$m, a number-based 50% particle diameter of 0.084 $\mu$m, a number-based 90% particle diameter of 0.147 $\mu$m, a number-based mode diameter of 0.073 $\mu$m, and a viscosity at 10°C of 608 mPa·s. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 3]

| | Time (min) | Stirring rotation speed (rpm) | pH | Reynolds number | Product temperature (°C) |
|---|---|---|---|---|---|
| Fermentation step | 0 (Start of fermentation) | 50 | 6.10 | 99 | 43.6 |
| | 60 | 50 | 5.93 | - | 43.1 |
| | 90 | 50 | 5.77 | - | 43.1 |
| | 120 | 50 | 5.60 | - | 43.1 |
| | 150 | 50 | 5.43 | - | 42.6 |
| | 180 | 50 | 5.34 | - | 43.2 |
| | 240 | 70 | 5.18 | - | 43.3 |
| | " | 80 | 5.18 | - | 43.3 |
| | 270 | 80 | 5.15 | - | 43.4 |
| | 300 | 80 | 5.10 | - | 43.5 |
| | 330 | 80 | 5.07 | - | 43.5 |
| | 360 | 80 | 5.03 | - | 43.4 |
| | 390 | 80 | 4.99 | - | 43.4 |
| | 420 | 80 | 4.99 | - | 43.5 |
| | " | 70 | 4.99 | - | 43.5 |
| | 480 | 70 | 4.93 | - | 43.4 |
| | 540 | 70 | 4.93 | - | 43.4 |
| | 570 | 70 | 4.87 | - | 43.4 |
| | 600 | 70 | 4.86 | - | 43.4 |
| | 630 | 70 | 4.84 | - | 43.4 |
| | 720 | 70 | 4.77 | - | 43.4 |
| | 750 | 70 | 4.77 | - | 43.2 |
| | 780 (End of fermentation) | 70 | 4.76 | 4 | 43.2 |
| Cooling step | Start of cooling | 70 | - | 4 | 43.2 |
| | End of cooling | 70 | - | 31 | 7.4 |

(Example 4)

In a fermentation tank having a capacity of 89.1 L, 60,000 g of the raw material mix of Production Example 4 was placed, and strain 1589 of Lactobacillus bulgaricus and strain 3078 of Streptococcus thermophilus were each added as a milk-fermenting starter in an amount of 2.0 mass% of the raw material mix, and fermentation was performed while stirring a mixture of the raw material mix and the milk-fermenting starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites × 80 to 120%.

Next, the fermented product after completion of fermentation was cooled until the temperature of the fermented product reached the product temperature shown in the following table while being stirred at the stirring rotational speed shown in the following table (cooling step) to produce fermented milk. Note that in the fermentation step and the cooling step, stirring was performed using a stirring blade having a blade diameter of 0.42 m and a rotation radius of 0.21 m. The volume-based 90% particle diameter of the raw material mix during the fermentation step was 125 µm or less.

17

The obtained fermented milk was liquid fermented milk. In addition, the fermented milk had a volume-based 90% particle diameter of 13.58 $\mu$m, a number-based 10% particle diameter of 0.056 $\mu$m, a number-based 50% particle diameter of 0.085 $\mu$m, a number-based 90% particle diameter of 0.151 $\mu$m, a number-based mode diameter of 0.073 $\mu$m, and a viscosity at 10°C of 85 mPa·s. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 4]

| | Time (min) | Stirring rotation speed (rpm) | pH | Reynolds number | Product temperature (°C) |
|---|---|---|---|---|---|
| Fermentation step | 0 (Start of fermentation) | 50 | 6.17 | 78131 | 43.0 |
| | 30 | 50 | 6.12 | 78131 | 43.0 |
| | 60 | 50 | 6.06 | 156261 | 43.0 |
| | 90 | 50 | 5.93 | 16109 | 43.0 |
| | 120 | 50 | 5.65 | 17172 | 43.0 |
| | 150 | 50 | 5.43 | 1483 | 43.0 |
| | 165 | 50 | 5.34 | 78 | 43.0 |
| | 180 | 70 | 5.25 | 117 | 43.1 |
| | 210 | 60 | 5.13 | 129 | 43.0 |
| | 240 | 60 | 5.04 | 190 | 43.1 |
| | 270 | 60 | 4.97 | 256 | 43.0 |
| | 300 | 50 | 4.93 | 252 | 43.0 |
| | 330 | 50 | 4.87 | 313 | 43.0 |
| | 360 | 50 | 4.82 | 347 | 43.1 |
| | 390 | 50 | 4.77 | 357 | 43.0 |
| | 420 | 50 | 4.74 | 356 | 43.0 |
| | 450 | 50 | 4.7 | 363 | 43.1 |
| | 480 | 50 | 4.66 | 429 | 43.0 |
| | 510 | 50 | 4.62 | 417 | 43.0 |
| | 540 | 50 | 4.57 | 468 | 43.0 |
| | 570 | 50 | 4.55 | 469 | 43.1 |
| | 600 (End of fermentation) | 50 | 4.51 | 421 | 43.0 |
| Cooling step | Start of cooling | 50 | 4.51 | 421 | 43.0 |
| | End of cooling | 50 | 4.55 | 2232 | 9.9 |

(Example 5)

In a fermentation tank having a capacity of 89.1 L, 60,000 g of the raw material mix of Production Example 5 was placed, and strain 1589 of Lactobacillus bulgaricus and strain 3078 of Streptococcus thermophilus were each added as a milk-fermenting starter in an amount of 2.0 mass% of the raw material mix, and fermentation was performed while stirring a mixture of the raw material mix and the milk-fermenting starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites × 80 to 120%.

Next, the fermented product after completion of fermentation was cooled until the temperature of the fermented product reached the product temperature shown in the following table while being stirred at the stirring rotational speed shown in the following table (cooling step) to produce fermented milk. Note that in the fermentation step and the cooling step, stirring was performed using a stirring blade having a blade diameter of 0.42 m and a rotation radius of 0.21 m. The volume-based 90% particle diameter of the raw material mix during the fermentation step was 125 μm or less.

The obtained fermented milk was liquid fermented milk. In addition, the fermented milk had a volume-based 90% particle diameter of 19.73 μm, a number-based 10% particle diameter of 0.055 μm, a number-based 50% particle diameter of 0.084 μm, a number-based 90% particle diameter of 0.146 μm, a number-based mode diameter of 0.073 μm, and a viscosity at 10°C of 36 mPa·s. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 5]

| | Time (min) | Stirring rotation speed (rpm) | pH | Reynolds number | Product temperature (°C) |
|---|---|---|---|---|---|
| Fermentation step | 0 (Start of fermentation) | 50 | 6.25 | 8730 | 41.9 |
| | 30 | 50 | 6.17 | - | 43.0 |
| | 60 | 50 | 6.03 | 11323 | 43.0 |
| | 90 | 50 | 5.88 | 12304 | 43.1 |
| | 120 | 50 | 5.54 | 6128 | 43.1 |
| | 130 | 50 | 5.43 | 444 | 43.0 |
| | 140 | 60 | 5.31 | 58 | 43.1 |
| | 150 | 60 | 5.23 | 94 | 43.1 |
| | 160 | 60 | 5.17 | 139 | 43.0 |
| | 180 | 60 | 5.09 | 175 | 43.1 |
| | 210 | 60 | 4.97 | 303 | 43.1 |
| | 240 | 60 | 4.86 | 493 | 43.0 |
| | 270 | 60 | 4.81 | 573 | 43.0 |
| | 300 | 60 | 4.71 | 721 | 43.0 |
| | 330 | 60 | 4.65 | 785 | 43.0 |
| | 360 | 60 | 4.58 | 902 | 43.1 |
| | 390 | 60 | 4.52 | 1003 | 43.1 |
| | 420 (End of fermentation) | 60 | 4.48 | 997 | 43.1 |
| Cooling step | Start of cooling | 60 | 4.48 | 997 | 43.1 |
| | End of cooling | 60 | 4.48 | 3990 | 7.4 |

(Example 6)

In a fermentation tank having a capacity of 89.1 L, 60,000 g of the raw material mix of Production Example 6 was placed, and strain 1589 of Lactobacillus bulgaricus and strain 3078 of Streptococcus thermophilus were each added as a milk-fermenting starter in an amount of 2.0 mass% of the raw material mix, and fermentation was performed while stirring a mixture of the raw material mix and the milk-fermenting starter at a stirring rotation speed shown in the following table (fermentation step). Note that during the fermentation step, a vertical circulation flow was generated in the mixture and the fermented product thereof within the fermentation tank due to stirring, and the mixture and the fermented product thereof were stirred almost uniformly without stagnation or dead zones. Further, during the fermentation step, the viscosity of the mixture and the fermented product thereof in the fermentation tank was substantially uniform by stirring. The viscosity of each of a site at or near the center of the fermentation tank at a depth of about 1/4 from the liquid level in the fermentation tank and a site at or near the inner wall of the fermentation tank at a depth of about 1/4 from the liquid level in the fermentation tank was in the range of the average value of the viscosities of these sites × 80 to 120%.

Next, the fermented product after completion of fermentation was cooled until the temperature of the fermented product reached the product temperature shown in the following table while being stirred at the stirring rotational speed shown in the following table (cooling step) to produce fermented milk. Note that in the fermentation step and the cooling step, stirring was performed using a stirring blade having a blade diameter of 0.42 m and a rotation radius of 0.21 m. The volume-based 90% particle diameter of the raw material mix during the fermentation step was 125 μm or less.

The obtained fermented milk was liquid fermented milk. In addition, the fermented milk had a volume-based 90% particle diameter of 44.79 μm, a number-based 10% particle diameter of 0.055 μm, a number-based 50% particle diameter of 0.084 μm, a number-based 90% particle diameter of 0.146 μm, a number-based mode diameter of 0.073 μm, and a viscosity at 10°C of 33 mPa·s. That is, it was possible to produce liquid fermented milk having a low viscosity and hardly having a visually observed aggregated precipitate even if curd crushing treatment or the like was not performed after cooling. In addition, the texture of this fermented milk was smooth.

[Table 6]

| | Time (min) | Stirring rotation speed (rpm) | pH | Reynolds number | Product temperature °C) |
|---|---|---|---|---|---|
| Fermentation step | 0 (Start of fermentation) | 30 | 6.23 | 1616 | 43.3 |
| | 30 | 40 | 6.12 | - | 43.5 |
| | 60 | 40 | 6.03 | - | 43.3 |
| | 90 | 40 | 5.87 | - | 43.2 |
| | 120 | 40 | 5.58 | - | 43.1 |
| | 135 | 40 | 5.46 | - | 43.2 |
| | 150 | 50 | 5.33 | - | 43.0 |
| | 180 | 50 | 5.16 | - | 43.2 |
| | 210 | 50 | 5.02 | - | 42.5 |
| | 240 | 50 | 4.94 | 1517 | 43.2 |
| | 270 | 50 | 4.83 | - | 43.8 |
| | 300 | 50 | 4.78 | - | 43.2 |
| | 330 | 50 | 4.69 | - | 43.0 |
| | 360 | 50 | 4.62 | - | 43.3 |
| | 390 | 50 | 4.53 | - | 43.0 |
| | 420 | 50 | 4.46 | - | 43.5 |
| | 450 | 50 | 4.42 | - | 43.3 |
| | 480 (End of fermentation) | 50 | 4.39 | 3721 | 43.1 |
| Cooling step | Start of cooling | 50 | 4.39 | 3721 | 43.1 |
| | End of cooling | 50 | 4.30 | 4735 | 9.7 |

(Example 7)

The fermented milk obtained in Example 1 was subjected to homogenization treatment using a homogenizer (Homogenizer L100-H2-CH manufactured by Sanwa Engineering Co., Ltd.). The homogenization treatment was performed under conditions at a primary pressure of 5 MPa and a secondary pressure of 1 MPa. The fermented milk after homogenization treatment had a volume-based 90% particle diameter of 30.65 μm, a number-based 10% particle diameter of 0.056 μm, a number-based 50% particle diameter of 0.084 μm, a number-based 90% particle diameter of 0.147 μm, a number-based mode diameter of 0.073 μm, and a viscosity at 10°C of 112 mPa·s. By performing the homogenization treatment, the viscosity was successfully further reduced.

(Example 8)

The fermented milk obtained in Example 2 was subjected to homogenization treatment using a homogenizer (Homogenizer L100-H2-CH manufactured by Sanwa Engineering Co., Ltd.). The homogenization treatment was performed under conditions at a primary pressure of 5 MPa and a secondary pressure of 1 MPa. The fermented milk after homogenization treatment had a volume-based 90% particle diameter of 21.46 $\mu$m, a number-based 10% particle diameter of 0.057 $\mu$m, a number-based 50% particle diameter of 0.087 $\mu$m, a number-based 90% particle diameter of 0.160 $\mu$m, a number-based mode diameter of 0.073 $\mu$m, and a viscosity at 10°C of 135 mPa·s. By performing the homogenization treatment, the viscosity was successfully further reduced.

(Comparative Examples 1 to 4)

In a fermentation tank having a capacity of 2 L, 1000 g of a raw material mix shown in the following table was placed, a milk-fermenting starter shown in the following table was added in an amount of 2.0 mass% of the raw material mix, and fermentation was performed in a state in which a mixture of the raw material mix and the milk-fermenting starter was left standing. Fermentation was carried out until the pH of the fermented product reached 4.8 or less. The fermentation was performed at a temperature of about 43°C. Then, the fermented product after completion of fermentation was subjected to curd crushing, and homogenization treatment was then performed under the conditions at a primary pressure of 10 MPa and a secondary pressure of 5 MPa to produce fermented milk. The viscosity of the obtained fermented milk is shown in the following table. In Comparative Examples 1 to 4, the raw material mix in the fermentation tank was in a lump state during fermentation, and strong curd was formed. Further, it was difficult to crush the curd after fermentation.

[Table 7]

|  | Type of raw material mix | Species of milk-fermenting starter | Viscosity of fermented milk (mPa · s) |
|---|---|---|---|
| Comparative Example 1 | Production Example 2 | 2038 strain of *Lactobacillus bulgaricus* 1131 strain of *Streptococcus thermophilus* | 17920 |
| Comparative Example 2 | Production Example 3 | 2038 strain of *Lactobacillus bulgaricus* 1131 strain of *Streptococcus thermophilus* | 29500 |
| Comparative Example 3 | Production Example 4 | 1589 strain of *Lactobacillus bulgaricus* 3078 strain of *Streptococcus thermophilus* | 13730 |
| Comparative Example 4 | Production Example 5 | 1589 strain of *Lactobacillus bulgaricus* 3078 strain of *Streptococcus thermophilus* | 20730 |

The fermented milk obtained in Comparative Examples 1 to 4 had a high viscosity and was set-type fermented milk (set yogurt).

(Comparative Example 5)

In a fermentation tank having a capacity of 5 L, 3500 g of the raw material mix of Production Example 6 was placed, and strain 2038 of Lactobacillus bulgaricus and strain 1131 of Streptococcus thermophilus were added as a milk-fermenting starter in an amount of 2.0 mass% of the raw material mix, and fermentation was performed in a state in which a mixture of the raw material mix and the milk-fermenting starter was left standing. During fermentation, the fermentation was performed in a state in which the fermented product was stirred from a time point when the pH of the fermented product reached 5.2. The fermentation was terminated when the pH of the fermented product reached 4.6, and the fermented milk was obtained by cooling the fermented product in a stirred state until the temperature of the fermented product reached 5.0°C. The fermentation was performed at a temperature of about 43°C. For stirring, stirring was performed using a stirring blade having a blade diameter of 0.17 m and a rotation radius of 0.085 m under conditions at a rotation speed of 50 to 80 rpm and a peripheral speed of 0.44 to 0.70 m/s. Note that in Comparative Example 5, coarse aggregates that could be visually confirmed were generated during fermentation.

The obtained fermented milk had a viscosity at 10°C of 207 mPa·s and was liquid fermented milk, but there were a large number of coarse aggregated precipitates. In addition, water separation was observed. Besides, the texture of this fermented milk was rough.

(Comparative Example 6)

In a fermentation tank having a capacity of 5 L, 3500 g of the raw material mix of Production Example 6 was placed, and strain 2038 of Lactobacillus bulgaricus and strain 1131 of Streptococcus thermophilus were added as a milk-fermenting starter in an amount of 2.0 mass% of the raw material mix, and fermentation was performed in a state in which a mixture of the raw material mix and the milk-fermenting starter was left standing. During fermentation, the fermented product was stirred for 1 minute when the pH of the fermented product reached 4.61. Thereafter, fermentation was performed in a state in which stirring was stopped and the mixture was left standing again. The fermentation was terminated when the pH of the fermented product reached 4.28 and the fermented product was stirred for 1 minute. Thereafter, cooling was performed until the temperature of the fermented product reached 5.0°C in a state in which stirring was stopped and the fermented product was left standing. The cooled fermented product was stirred for 40 seconds to produce fermented milk. The fermentation was performed at a temperature of 40 to 43°C. For stirring, a stirring blade having a blade diameter of 0.17 m and a rotation radius of 0.085 m was used. Stirring during fermentation was performed at a rotation speed of 40 rpm, and stirring after cooling was performed at a rotation speed of 1000 rpm. In the method of Comparative Example 6, the obtained fermented milk had a high viscosity, and the viscosity at 10°C was 9910 mPa·s. In addition, coarse aggregates that could be confirmed with the naked eye were generated. Further, strong curd was formed during fermentation, and it was difficult to crush the curd after fermentation.

(Comparative Example 7)

In a fermentation tank having a capacity of 5 L, 3500 g of the raw material mix of Production Example 6 was placed, and strain 2038 of Lactobacillus bulgaricus and strain 1131 of Streptococcus thermophilus were added as a milk-fermenting starter in an amount of 2.0 mass% of the raw material mix, and fermentation was performed while stirring a mixture of the raw material mix and the milk-fermenting starter. For stirring, stirring was performed using a stirring blade having a blade diameter of 0.17 m and a rotation radius of 0.085 m under conditions at a rotation speed of 50 to 80 rpm and a peripheral speed of 0.44 to 0.70 m/s. The fermentation was performed at a temperature of 40 to 43°C. When the pH of the fermented product reached 4.6, the fermentation was terminated and stirring was stopped. Thereafter, cooling was performed until the temperature of the fermented product reached 5.0°C in a state in which the fermented product was left standing. The fermented milk was thus obtained. In the method of Comparative Example 7, the obtained fermented milk had a high viscosity, and the viscosity at 10°C was 5250 mPa·s. In addition, coarse aggregates that could be confirmed with the naked eye were generated.

<Sensory evaluation>

With respect to the fermented milk of Example 2 and Comparative Example 1, sensory evaluation of the aroma, salty taste, richness (rich flavor), sour taste, and overall flavor evaluation of the milk was performed by a total of 6 panelists. All of the panelists were trained in sensory evaluation in Meiji Co., Ltd., which manufactures and sells fermented milk, and were skilled persons (experts in sensory evaluation) having a testing history of 10 years or more, who conducted sensory evaluation tests on a routine basis.

[Overall flavor evaluation]

A: Strong
B: Somewhat strong
C: Somewhat weak
D: Weak

[Milk aroma]

A: Strong
B: Somewhat strong
C: Somewhat weak
D: Weak

[Salty taste]

A: Strong

B: Somewhat strong

C: Somewhat weak

D: Weak

[Richness (Rich flavor)]

A: Strong

B: Somewhat strong

C: Somewhat weak

D: Weak

[Sour taste]

A: Strong

B: Somewhat strong

C: Somewhat weak

D: Weak

[Table 8]

|  | Example 2 | Comparative Example 1 |
|---|---|---|
| Overall flavor evaluation | A | C |
| Milk aroma | B | B |
| Salty taste | B | C |
| Richness (Rich flavor) | B | B |
| Sour taste | B | D |

The fermented milk of Example 2 had a better salty taste and sour taste than the fermented milk of Comparative Example 1, and had a high overall flavor evaluation.

<To evaluate storage stability>

The fermented milk of each of Examples 1 to 5, 7, and 8 and Comparative Examples 1 to 4 was placed in a sterile test cup (BE2200 manufactured by Eiken Chemical Co., Ltd.; cup size: upper diameter of 58 mm, lower diameter of 56 mm, height of 72 mm, capacity of 100 ml), and stored under standing at a temperature of 10°C. The viscosity was measured 5 days, 7 days, and 14 days after the start of storage. The viscosity of the fermented milk after storage was measured according to the procedure described in the viscosity measurement method described above. The values of viscosity change are also shown in the following table. The viscosity change is a ratio of the viscosity of the fermented milk after storage to the initial viscosity (viscosity of the fermented milk on day 0 of storage).

[Table 9]

| | Initial viscosity (mPa · s) | After 5 days | | After 7 days | | After 14 days | |
|---|---|---|---|---|---|---|---|
| | | Viscosity (mPa · s) | Viscosity change ratio | Viscosity (mPa · s) | Viscosity change ratio | Viscosity (mPa · s) | Viscosity change ratio |
| Example 1 | 310 | - | - | 227 | 0.7 | 230 | 0.7 |
| Example 2 | 295 | 207 | 0.7 | 199 | 0.7 | 204 | 0.7 |
| Example 3 | 608 | 932 | 1.5 | 840 | 1.4 | 850 | 1.4 |
| Example 4 | 85 | 54 | 0.6 | 56 | 0.7 | 65 | 0.8 |
| Example 5 | 36 | 25 | 0.7 | 18 | 0.5 | 27 | 0.8 |
| Example 7 | 112 | - | - | 145 | 1.3 | 151 | 1.3 |
| Example 8 | 135 | 161 | 1.2 | 144 | 1.1 | 154 | 1.1 |
| Comparative Example 1 | 17920 | 56300 | 3.1 | 62600 | 3.5 | 61400 | 3.4 |
| Comparative Example 2 | 29500 | 74500 | 2.5 | 75500 | 2.6 | 145700 | 4.9 |
| Comparative Example 3 | 13730 | 23700 | 1.7 | 19800 | 1.4 | 26500 | 1.9 |
| Comparative Example 4 | 20730 | 49300 | 2.4 | 33400 | 1.6 | 41700 | 2.0 |

As shown in the above table, the fermented milk of Examples had a small variation in viscosity after storage, and was excellent in storage stability.

Even when the milk-fermenting starter is changed to any one of Lactobacillus bulgaricus described in paragraphs 0025 to 0028 and 0031, Streptococcus thermophilus described in paragraphs 0032 and 0034, and Lactobacillus casei described in paragraph 0035 in Examples 1 to 8, the same effects as in each Example can be elicited.

## Claims

1. A method for producing fermented milk, the method comprising: a fermentation step of adding a milk-fermenting starter to a raw material mix containing raw material milk to ferment a mixture of the raw material mix and the milk-fermenting starter; and a cooling step of cooling a fermented product obtained in the fermentation step, wherein

   in the fermentation step, fermentation is performed while flowing the mixture or the fermented product thereof such that a volume-based 90% particle diameter of the mixture or the fermented product thereof does not exceed 125 $\mu$m, and
   in the cooling step, the fermented product obtained in the fermentation step is cooled while flowing.

2. The method for producing fermented milk according to claim 1, wherein a ratio of the volume-based 90% particle diameter of the fermented product after the cooling step to the volume-based 90% particle diameter of the raw material mix before the fermentation step is 450 or less.

3. The method for producing fermented milk according to claim 1 or 2, wherein the raw material mix has a solid content of 8.0 mass% or more.

4. The method for producing fermented milk according to claim 1 or 2, wherein the raw material mix has a protein content of 5.6 mass% or more.

5. The method for producing fermented milk according to claim 1 or 2, wherein in the fermentation step, fermentation is performed while the mixture or the fermented product thereof is caused to flow so that a Reynolds number of the mixture or the fermented product thereof is from 5 to 250,000, and

in the cooling step, the fermented product obtained in the fermentation step is cooled while flowing so that a Reynolds number of the fermented product is from 10 to 35000.

6. The method for producing fermented milk according to claim 1 or 2, wherein in the fermentation step, fermentation is performed while a shear force applied to the mixture or the fermented product thereof is changed stepwise or continuously between a start of fermentation and an end of fermentation.

7. The method for producing fermented milk according to claim 6, wherein in the fermentation step, when a pH of the fermented product falls below a preset pH of 5.7 to 5.2, the shear force applied to the fermented product is higher than that at a time point when the pH is equal to or higher than the preset pH.

8. The method for producing fermented milk according to claim 1 or 2, wherein the fermentation step is performed until a pH of the fermented product is 4.8 or less and a desired pH is reached.

9. The method for producing fermented milk according to claim 1 or 2, which is a method for producing liquid fermented milk.

## INTERNATIONAL SEARCH REPORT

| International application No. |
| --- |
| **PCT/JP2024/009707** |

**A. CLASSIFICATION OF SUBJECT MATTER**

***A23C 9/123***(2006.01)i

FI: A23C9/123

According to International Patent Classification (IPC) or to both national classification and IPC

**B. FIELDS SEARCHED**

Minimum documentation searched (classification system followed by classification symbols)

A23C9/12-9/137

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); Google

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2018-201401 A (MEIJI CO., LTD.) 27 December 2018 (2018-12-27)<br>paragraph [0049], examples 1, 2, table 1, fig. 6 | 1-9 |
| Y | WO 2006/057265 A1 (MEIJI DAIRIES CORPORATION) 01 June 2006 (2006-06-01)<br>paragraph [0147] | 1-9 |
| Y | JP 2019-118311 A (MEIJI CO., LTD.) 22 July 2019 (2019-07-22)<br>example 1 | 1-9 |
| Y | JP 2019-176781 A (MEIJI CO., LTD.) 17 October 2019 (2019-10-17)<br>example 1 | 1-9 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 May 2024** | **28 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/009707**

| Patent document cited in search report | | | Publication date (day/month/year) | Patent family member(s) | | | Publication date (day/month/year) |
|---|---|---|---|---|---|---|---|
| JP | 2018-201401 | A | 27 December 2018 | (Family: none) | | | |
| WO | 2006/057265 | A1 | 01 June 2006 | EP paragraph [0148] | 1815746 | A1 | |
| JP | 2019-118311 | A | 22 July 2019 | US example 1 WO | 2020/0359640 2019/135408 | A1 A1 | |
| JP | 2019-176781 | A | 17 October 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018161114 A